# EUROPÄISCHE PATENTSCHRIFT

(11) **EP 3 901 435 B1**
(45) Veröffentlichungstag und Bekanntmachung des Hinweises auf die Patenterteilung: **07.01.2026**
(21) Anmeldenummer: 21169918.6
(22) Anmeldetag: 22.04.2021
(51) Int. Cl.: F02B 19/10, F02B 19/12, F02M 21/02, F02B 19/02

(54) **FAHRZEUG MIT EINEM GASMOTOR MIT VORKAMMERZÜNDUNG UND VERFAHREN ZUM STEUERN EINES SOLCHEN GASMOTORS**
VEHICLE WITH PRE-CHAMBER IGNITION GAS ENGINE AND METHOD FOR CONTROLLING SUCH GAS ENGINE
VÉHICULE AVEC MOTEUR À GAZ D'ALLUMAGE À PRÉCHAMBRE ET PROCÉDÉ DE COMMANDE D'UN TEL MOTEUR À GAZ

(30) Priorität: 23.04.2020 CH 4812020; 26.01.2021 CH 732021
(43) Veröffentlichungstag der Anmeldung: 27.10.2021
(73) Patentinhaber: Liebherr Machines Bulle SA, 1630 Bulle (CH)
(72) Erfinder: Seba, Bouzid, 1636 Broc (CH); Weiss, Ulrich, 1752 Glâne (CH); Puran, Bakir, 1696 Vuisternens-en-Ogoz (CH); Andreutti, Roberto, 6917 Barbengo (CH)
(74) Vertreter: Lorenz Seidler Gossel Part. mbB

(56) Entgegenhaltungen:
- WO-A1-2015/138987
- DE-A1- 102017 219 560
- JP-A- 2001 082 148
- JP-A- 2001 263 069
- JP-A- 2006 322 367
- US-A1- 2018 166 862

## Beschreibung

Die vorliegende Erfindung betrifft ein Fahrzeug mit einem Gasmotor mit Vorkammerzündung und ein Verfahren zum Steuern des Fahrzeugs. Nach der Erfindung wird der Gasmotor mit Wasserstoff betrieben.

Aufgrund legislativer Änderungen in der Besteuerung von Kraftstoffen und/oder der Abgasgesetzgebung wird der Einsatz von gasförmigen Kraftstoffen selbst für Fern-LKWs und/oder für mobile Arbeitsmaschinen zur Realität werden. Unter den gasförmigen Kraftstoffen bietet beispielsweise Wasserstoff die Option einer nahezu klimaneutralen "Well-to-Tank Bereitstellung". Darüber hinaus kann Wasserstoff auch in mobilen Brennstoffzellenantrieben und somit in tatsächlich emissionsfreien (Zero Emission) Fahrzeugen eingesetzt werden. Wasserstoffmotoren bieten das Potenzial selbst strenge Abgasgrenzwerte allein durch innermotorische Maßnahmen einhalten zu können, weswegen zumindest das Abgasnachbehandlungssystem erheblich reduziert werden kann.

Kriterien von fundamentaler Bedeutung für einen Motor sind der Wirkungsgrad und die Rohemissionen, wobei hierbei eine Unterscheidung der abgegebenen Schadstoffe nach Art und Quantität zu treffen ist. Bekanntermaßen erfordern unterschiedliche Gruppen von Schadstoffen teilweise auch unterschiedliche Arten von Abgasnachbehandlungen, die sich wiederum in ihrem Aufwand bezüglich der Anschaffungs- und Betriebskosten unterscheiden. Allgemein bekannte Beispiele solcher Schadstoffgruppen sind Partikel, Stickoxide und Kohlenwasserstoffe.

Relevant für solche mit konventionellen Gasen (z.B. Erdgas, Autogas - auch als LPG bezeichnet) betriebenen Gasmotoren sind die Stickoxide (NO_{X}) und unverbrannte Kohlenwasserstoffe, die je nach Betriebspunkt des Motors in unterschiedlicher Konzentration entstehen und einer entsprechenden Nachbehandlung bedürfen.

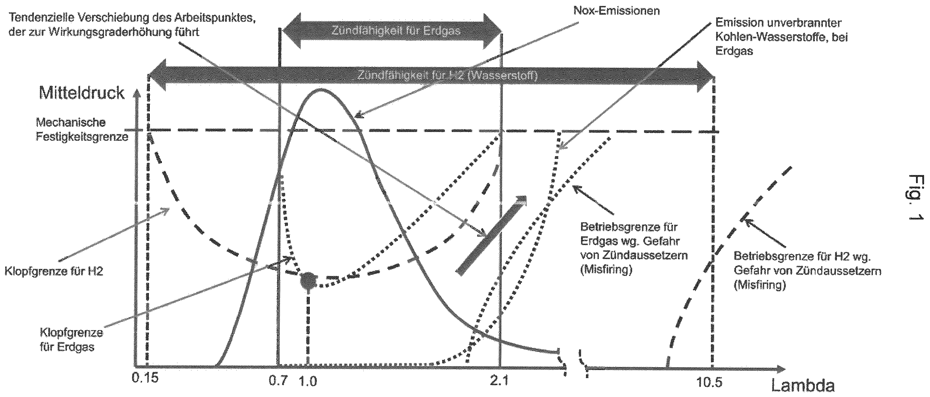

Bekanntermassen führt das Betreiben von Motoren im Bereich der stöchiometrischen Verbrennung bei steigendem Luftüberschuss zu einer Erhöhung von NO_{X}-Emissionen. Ein zunehmend starker Luftüberschuss ermöglicht eine Erhöhung des Motor-Wirkungsgrades, was auch noch fernab der stöchiometrischen Verbrennung - d.h. bei Lambda-Werten deutlich grösser als 1 - zutrifft (vgl. untenstehende Beschreibungspassage zu Fig. 1).

Ein grosser Zugewinn der erwähnten Wirkungsgradsteigerung stellt eine Steigerung des Kompressionsverhältnisses dar, was bei fremdgezündeten Motoren eine Anhebung der Klopfgrenze erfordert. Dies erfüllt sich bei einem Motorbetrieb mit einem entsprechenden Luftüberschuss (also einem hohen Lambda-Wert), weswegen man sich bei für dauerhaft unter hohen Leistungen betriebenen Motoren und für Motoren mit langen Laufleistungen häufig für eine sogenannte Abmagerung entscheidet. Für das Beispiel Erdgas werden derartige Motoren bei einem Verbrennungsluftverhältnis Lambda von 1,2 bis 1,5 betrieben.

Unter gleichbleibender Kraftstoff-Zuführungsmenge bewirkt ein steigender Lambda Wert per se eine zunehmende dem Bennraum zugeführte Ladeluftmenge, was unter der Voraussetzung, dass die zugeführte Ladeluft keine stark erhöhte Temperatur aufweist für eine Absenkung der Verbrennungstemperatur sorgt, wodurch ein Rückgang der NO_{X}-Emissionen und eine Erhöhung der Klopffestigkeit eintreten. Für auf Kohlenstoff basierte Kraftstoffe ergibt sich bei deren Verbrennung unter einem hohen Lambda-Wert zwar der Nachteil eines Emissions-Anstiegs von unverbrannten bzw. teilverbrannten Kohlenwasserstoffen, die im Abgas allerdings mit einem geringeren Aufwand als Stickoxide abgebaut werden können. Dennoch wird - wie bereits erwähnt - vielfach ein Motorbetrieb unter einem vergleichsweise hohen Luftüberschuss bevorzugt, da dies höhere Wirkungsgrade ermöglicht, und sich im Abgas unverbrannte Kohlenwasserstoffe mit einem geringeren Aufwand in dem Abgas abbauen lassen als Stickoxide.

Der Abmagerung sind jedoch Grenzen gesetzt, weil abhängig von der Art und der Qualität des Kraftstoffs ab einem gewissen Luftüberschuss, d.h. ab einem bestimmten Lambda-Wert das Kraftstoff-Luftgemisch - im Folgetext als Gemisch bezeichnet - keine ausreichend hohe Zündfähigkeit und/oder keine ausreichend hohe Brenngeschwindigkeit mehr aufweist.

Um auch bei einem mageren Gemisch im Brennraum resp. im Hauptbrennraum für eine verlässliche Zündung zu sorgen, kann in einer vom Hauptbrennraum eines Zylinders räumlich separierten Vorrichtung, einer sogenannten gespülten Vorkammer, ein fetteres und somit leichter entflammbares Gemisch bereitgestellt werden, das mit Hilfe einer primären Zündvorrichtung - im Folgetext als Zündkerze bezeichnet - entzündet wird und über entsprechende Überströmkanäle zu einem Entzünden des abgemagerten Gemisches im Hauptbrennraum führt.

Die Vorkammer trägt dabei eine sehr viel höhere Energie in den Hauptbrennraum ein, als dies durch eine Zündkerze oder dergleichen der Fall wäre, so dass auch entsprechend stark abgemagerte Gemische im Hauptbrennraum entzündet werden können.

Nach einer Fortbildung der Erfindung kann vorgesehen sein, dass das Volumen des Hauptbrennraums, d.h. der Hubraum in einem Bereich von 1,5 bis 3 Liter, vorzugsweise von 2 bis 2,5 l liegt, wobei das Volumen der Vorkammer bei 1 bis 5 ccm, vorzugsweise bei 2 bis 3 ccm liegt.

Nach einer alternativen oder ergänzenden Fortbildung kann ein Kompressionsverhältnis bevorzugt zwischen 11 und 20, besonders bevorzugt zwischen 11 und 17 und ganz besonders bevorzugt zwischen 12 und 15 vorgesehen sein. Aufgrund einer Skalierbarkeit dieser Grössenverhältnisse kann demnach vorgesehen sein, dass der Quotient aus (i) dem Volumen des Hauptbrennraums in der oberen Totpunktstellung des Kolbens und (ii) dem Vorkammer-Volumen bevorzugt zwischen 0.6 % und 3 %, besonders bevorzugt zwischen 0.75 % und 2.8 und ganz besonders bevorzugt zwischen 0.9 % und 2.7% liegt.

Nach einer alternativen oder ergänzenden Fortbildung kann für einen Motor mit dem vorgesehenen Hubraum der Gesamtquerschnitt der Überströmkanäle bevorzugt einen Wert zwischen von 3 mm² bis 12 mm² und besonders bevorzugt von 3.5 mm² bis 10 mm² ganz besonders bevorzugt von 4 mm² bis 8 mm² aufweisen. Aufgrund einer Skalierbarkeit der beispielhaft angegebenen Grössenverhältnisse kann demnach vorgesehen sein, dass der Quotient in der Einheit Meter aus (i) dem Volumen des Hauptbrennraums in der oberen Totpunktstellung des Kolbens und (ii) dem Gesamtquerschnitt der Überströmkanäle einen Wert bevorzugt zwischen 12 und 90, besonders bevorzugt zwischen 16 und 80 und ganz besonders bevorzugt zwischen 14 und 60 aufweist.

Neben einer vorteilhaften Verteilung der Gemisch-Bestandteile im Hauptbrennraum stellt insbesondere ein geordnetes Zünden des im Hauptbrennraum vorhandenen Gemisches eine technische Herausforderung dar, so dass darin schliesslich eine möglichst optimale Verbrennung eintritt. Daher konkurrieren seit jeher die Vorkammer - unabhängig davon, ob es sich um eine gespülte oder ungespülte Vorkammer handelt - und der Kraftstoffinjektor - im Folgetext als Injektor bezeichnet - des Hauptbrennraums um die optimale Anordnungsposition, an dem eine möglichst vorteilhafte Beschickung mit Kraftstoff bzw. ein möglichst vorteilhaftes Einschiessen der Zündfackeln möglich ist.

Aus der WO 2015/138987 ist bereits ein Fahrzeug nach dem Oberbegriff des Anspruch 1 bekannt gewesen. Weitere Gasmotoren mit Vorkammer waren aus JP 2001 082148 A und JP 2001 263069 A bekannt.

Ziel der vorliegenden Erfindung ist die Schaffung eines Fahrzeugs mit einem Gasmotor, mit dem eine besonders starke Abmagerung möglich ist, der in seiner Herstellung besonders günstig und in seinem strukturellen Aufbau einfach ist.

Dies gelingt mit einem Fahrzeug, das sämtliche Merkmale des unabhängigen Anspruchs 1 aufweist. Weitere vorteilhafte Ausgestaltungen sind dabei in den abhängigen Ansprüchen enthalten.

Nach der Erfindung ist ein Fahrzeug mit Gasmotor mit Vorkammerzündung vorgesehen, der einen Hauptbrennraum in einem Zylinder des Motors zum Verbrennen eines Gemisches, und eine Vorkammer mit einer darin angeordneten bzw. hineinragenden Zündvorrichtung und einem darin angeordneten bzw. hineinragenden Injektor umfasst, wobei die Vorkammer über mindestens einen Überströmkanal verfügt, der eine Fluidverbindung zwischen der Vorkammer und dem Hauptbrennraum darstellt. Der Motor ist dadurch gekennzeichnet, dass der in der Vorkammer angeordnete Injektor der einzige Injektor bzw. der einzige Eintritt ist, über den Kraftstoff in den zugehörigen Hauptbrennraum eingeführt werden kann. Wie dem Fachmann klar ist, handelt es sich bei dem Motor um eine Brennkraftmaschine oder eine Verbrennungskraftmaschine, die über mindestens einen Zylinder verfügt, die den Hauptbrennraum beherbergt und dem eine Vorkammer zugeordnet ist.

Der Gegenstand des Anspruchs beruht auf dem Ansatz, dass die gesamte Kraftstoffzufuhr in den Hauptbrennraum von dem in der Vorkammer angeordneten Injektor stammt.

Weiter erfindungsgemäß ist der verwendete Kraftstoff Wasserstoff und die Kraftstoffeinspritzung in die Vorkammer erfolgt derart, so dass ein Verbrennungsluftverhältnis Lambda in der Vorkammer zum Zündzeitpunkt einen Wert zwischen 0,33 und 0,53 aufweist.

Damit ist bei einer entsprechenden Positionierung der Vorkammer sowohl eine Quasi-Direkteinspritzung von Kraftstoff aus einer besonders vorteilhaften Position möglich. Die vormals für einen Motor mit Direkteinspritzung zu treffende Abwägung hinsichtlich der beiden miteinander konkurrierenden Anordnungspositionen von einem Injektor in dem Hauptbrennraum und der Vorkammer ist demnach aufgelöst.

Zur Erhöhung der Klopffestigkeit und/oder zur Ermöglichung von besonders hohen Wirkungsgraden ist eine späte Kraftstoffeinspritzung, d.h. eine erst unmittelbar vor der Zündung erfolgende Einspritzung vorteilhaft. Dies kann durch eine Direkteinspritzung unter einem Druck von einigen hundert bar erreicht werden. Allerdings ist bei einer späten Einspritzung ein erhöhtes Augenmerk auf die Gemischbildung zu richten. Eine schlechte Gemischbildung im Brennraum kann zu erhöhten Emissionen, zu Wirkungsgradverlusten, zu einer Abnahme des Leistungsabgabevermögens und/oder zu erhöhten Belastungen bestimmter Bauteile führen. Der erfindungsgemäße Motor kann demnach die Vorteile einer Kraftstoff-Direkteinspritzung unter einer besonders vorteilhaften Positionierung der Kraftstoffzufuhr in den Hauptbrennraum aufweisen.

Durch die Verwendung einer gespülten Vorkammer, also einer Vorkammer, die -wie in der Erfindung - über einen darin angeordneten Injektor verfügt, erzielt man mit einem maßvollen Aufwand eine deutlich besser reproduzierbare Zündung des Gemisches. Durch entsprechende Bemühungen, das Zünden im Hauptbrennraum zum jeweils optimalen Zeitpunkt auszulösen, erzielt man eine sehr deutliche Konzentration des Kollektivs der Zündvorgänge zu diesem Optimum. In Bezug auf dynamisch betriebene Motoren kann unabhängig vom momentanen Betriebspunkt des Motors, eine gespülte Vorkammer unter einem solchen nahezu gleichbleibendem Verbrennungsluftverhältnis Lambda betrieben werden, welches für das dortige Zünden des Gemisches durch die externe Zündquelle besonders vorteilhaft ist. Weiter sorgt die beliebig wählbare Anordnungsposition dafür, dass die Vorkammer an einer vorteilhaften Position angeordnet werden kann, wodurch die Überströmkanäle in ihrer Funktion als Schusskanäle besonders vorteilhaft positioniert werden können, wodurch sich das Entflammen der Gemischschichten in dem Hauptbrennraum günstig gestaltet, wodurch eine effiziente Verbrennung des darin eingeführten Kraftstoffs eintritt.

Nach einer optionalen Modifikation der Erfindung kann vorgesehen sein, dass der Motor ein fremdgezündeter Motor bzw. ein Ottomotor ist.

Der Motor ist ein Gasmotor. Dann dient die Vorkammer als Zündverstärker, wobei dessen Volumen um Grössenordnungen kleiner als der Hauptbrennraum ist. So kann der Hauptbrennraum mehr als 10 mal, vorzugsweise mehr als 50 mal so groß sein wie die als Zündverstärker wirkende Vorkammer.

Nach einer Modifikation der Erfindung kann vorgesehen sein, dass der vorzugsweise zylinderförmig oder etwa zylinderförmig ausgestaltete Hauptbrennraum eine Symmetrieachse aufweist, die mit einer Symmetrieachse der Vorkammer bzw. des Vorkammergehäuses zusammenfällt.

So kann bspw. gewährleistet werden, dass die aus der Vorkammer schiessenden Zündfackeln möglichst synchron in die Gemischschichten im Hauptbrennraum eindringen und diese Schichten geordnet entflammen. Die Positionierung einer erfindungsgemässen Vorkammer auf der Symmetrieachse des Hauptbrennraums erzielt eine annähernd optimale Gemischbildung im Hauptbrennraum und sorgt gleichzeitig für eine gleichmässige Entflammung.

Dabei kann weiter vorgesehen sein, dass der vorzugsweise zylinderförmig oder etwa zylinderförmig ausgestaltete Hauptbrennraum eine Symmetrieachse aufweist, die mit einer Anordnungsposition des Injektors in der Vorkammer zusammenfällt.

Hierdurch wird eine noch bessere Verteilung des Kraftstoffs in dem Hauptbrennraum erreicht, da die Abgabe von Kraftstoff in die Vorkammer, bzw. von der Vorkammer in den Hauptbrennraum gleichmäßig erfolgt.

Unter anderem kann nach der Erfindung dabei auch vorgesehen sein, dass der vorzugsweise zylinderförmig oder etwa zylinderförmig ausgestaltete Hauptbrennraum eine Symmetrieachse aufweist, die gleichzeitig eine Drehachse für dazu drehsymmetrisch angeordnete mehrere Überströmkanäle im Übergang von Vorkammer und Hauptbrennraum ist. Dadurch wird eine gleichmäßige Entflammung des Gemisches im Hauptbrennraum erreicht durch die aus den Überströmkanälen der Vorkammer hineinschiessenden Zündfackeln.

Auch kann die Vorkammer selbst und/oder das Vorkammergehäuse eine Symmetrieachse aufweisen, die mit der Symmetrieachse des Hauptbrennraums zusammenfällt.

Nach einer optionalen Modifikation der vorliegenden Erfindung kann vorgesehen sein, dass ein Ventil in einer Vorkammer und Hauptbrennraum trennenden Wand vorhanden ist, welches neben dem mindestens einen Überströmkanal für eine wahlweise zusätzliche fluidische Verbindung zwischen Vorkammer und Hauptbrennraum sorgt. Diese durch das Ventil vorsehbare fluidische Verbindung ist verschließbar.

Die Trennwand definiert dabei die Grenze zwischen der Vorkammer und dem Hauptbrennraum und ist durch den mindestens einen Überströmkanal (die auch Schusskanäle genannt werden) perforiert.

Neben dem mindestens einen Überströmkanal ist in der Trennwand ein Ventil angeordnet, dass eine Fluidverbindung von Vorkammer und Hauptbrennraum wahlweise verschliessen oder öffnen kann. Es gibt somit eine zusätzliche Öffnung in der Trennwand, die im Gegensatz zu dem mindestens einen Überströmkanal verschliessbar ist, durch die bspw. Kraftstoff von der Vorkammer in den Hauptbrennraum strömen kann; gleichermassen Gemisch in die Vorkammer.

Dabei kann vorgesehen sein, dass das Ventil ein aktiv steuerbares Ventil ist, um je nach Bedarf eine zusätzliche fluidische Verbindung zwischen Vorkammer und Hauptbrennraum zu bilden. Die aktive Ansteuerbarkeit dieses Ventils kann vorteilhaft zu einem gleichmäßigen Verteilen des Kraftstoffs in dem Hauptbrennraum beitragen.

Es kann jedoch nach der Erfindung auch vorgesehen sein, dass das Ventil ein passives Ventil ist, das in einem geöffneten Zustand eine zusätzliche fluidische Verbindung zwischen Vorkammer und Hauptbrennraum bildet und in einem geschlossenen Zustand diese zusätzliche fluidische Verbindung verschließt. Dabei kann vorzugsweise das Ventil einen geschlossenen Zustand einnehmen, wenn ein Druck in der Vorkammer größer als ein Druck in dem Hauptbrennraum ist, und einen offenen Zustand einnehmen, wenn ein Druck in der Vorkammer kleiner als ein Druck in dem Hauptbrennraum ist.

Dies führt dazu, dass für das vom Hauptbrennraum in die Vorkammer einzuführende Gemisch, welches im vorliegenden Fall einer gespülten Vorkammer für das Eintragen von Luft resp. Sauerstoff erforderlich ist, bei einem offenen Ventil ein vergrößerter Strömungsquerschnitt vorliegt, wohingegen bei einem Entzünden des Gemisches in der Vorkammer das Ventil aufgrund des dadurch sehr hohen Drucks schließt und ein verringerter nur durch den mindestens einen Überströmkanal gebildeter Durchgang durch die Trennwand vorhanden ist, so dass es zu einem vorteilhaften, sehr schnellen und/oder sehr tiefen Eindringen der Zündfackeln in die Gemischschichten des Hauptbrennraums kommt.

Wie beabsichtigt, steht daher den aus der Vorkammer heraustretenden Zündfackeln dieser zusätzliche durch das Ventil vorsehbare Strömungsquerschnitt nicht zur Verfügung, sondern es können lediglich die Überströmkanäle genutzt werden, die daher auf ihre Funktion hin als sogenannte Schusskanäle optimiert werden können. Die umgekehrte Strömungsrichtung zum Aufnehmen von Gemisch in die Vorkammer, damit dort Sauerstoff bzw. Luft vorhanden ist, kann dann zu maßgeblichen Teilen über das offene Ventil erfolgen.

Nach einer Fortbildung der Erfindung kann ferner vorgesehen sein, dass das Ventil einen in der die Vorkammer und Hauptbrennraum trennenden Wand angeordneten beweglichen Ventilstössel aufweist, der vorzugsweise zu einer Seite hin mittels eines Federelements vorgespannt ist.

Optional kann die Vorspannung in einer bestimmten Stärke derart ausgeführt sein, dass bei einem Überdruck in der Vorkammer, der bei der Kraftstoff-Einspritzung vorliegt, das Ventil geöffnet ist, wohingegen sich das Ventil bei der Zündung des Vorkammer-Gemisches schlagartig schliesst.

Dabei kann bspw. die fluidische Verbindung ein im Ventilstössel angeordneter Kanal sein, der, wenn der Stössel in Richtung Hauptbrennraum ausgelenkt ist, durch die Trennwand verschlossen ist und, wenn der Stössel in Richtung Vorkammer ausgelenkt ist, eine Fluidverbindung zwischen Vorkammer und Hauptbrennraum darstellt. Bspw. ist hier an einen T-förmig gebildeten Kanal in dem Ventilstössel zu denken, so dass bei einer entsprechenden Auslenkung des Stössels ein leichtes Schließen des Kanals durch Einrücken des Stössels in die Trennwand erfolgt.

So kann bspw. sichergestellt sein, dass das Ventil dann, wenn das Gemisch in der Vorkammer gerade gezündet hat, was gleichzeitig dem Zeitraum entspricht, in welchem der in der Vorkammer herrschende Überdruck gegenüber dem im Hauptbrennraum vorliegenden Druck am höchsten ist, geschlossen ist.

Dabei kann ferner vorgesehen sein, dass die die Vorkammer und den Hauptbrennraum trennende Wand und der Ventilstössel so ausgebildet sind, dass in einem geöffneten und/oder einem geschlossenen Zustand eine jeweilige Seite der Wand bündig zu dem Ventil ausgerichtet ist.

So können derartige Verwirbelungen verhindert werden, die nachteilhaft für ein Ausbreiten einer Flammenfront oder eine bestimmte gewünschte Strömungsform sind.

Nach einer weiteren optionalen Modifikation kann vorgesehen sein, dass das Ventil oder ein Ventilstössel des Ventils koaxial zu einer Symmetrieachse des Hauptbrennraums angeordnet ist, vorzugsweise auch koaxial zu einer Symmetrieachse der Vorkammer und/oder des Vorkammergehäuses angeordnet ist.

Weiter kann nach einer vorteilhaften Ausgestaltung vorgesehen sein, dass die in einem geöffneten Zustand des Ventils gebildete fluidische Verbindung durch die Trennwand symmetrisch oder drehsymmetrisch zu einer Symmetrieachse des Hauptbrennraums ist.

Nach der Erfindung wird der Motor mit Wasserstoff betrieben, dessen Zündfähigkeit auch für Lambda-Werte oberhalb von 2,5 hinausreicht, bevorzugt oberhalb von 3 hinausreicht und ganz besonders bevorzugt oberhalb von 5 hinausreicht.

Ferner kann vorgesehen sein, dass der Motor mit einer mehrstufigen Aufladung der in den Hauptbrennraum einzuführenden Luft versehen ist, wobei vorzugsweise in einem Ladeluftpfad zwischen den einzelnen Stufen der Aufladung jeweils mindestens ein Ladeluftkühler angeordnet ist oder für jede der Stufen jeweils mindestens ein zugehöriger Ladeluftkühler im Ladeluftpfad stromabwärts angeordnet ist.

Bei der Umsetzung einer mehrstufigen Aufladung kann nach der Erfindung vorgesehen sein, dass bei mindestens zwei in Reihe geschalteten Verdichtereinheiten der mehrstufigen Aufladung jeweils ein Ladeluftkühler unmittelbar nachgeschaltet ist, der die von einer Verdichtereinheit komprimierte und in ihrer Temperatur angehobene Ladeluft kühlt. Vorzugsweise ist dabei vorgesehen, dass die mindestens zwei jeweils einer Verdichtereinheit nachgeordneten Ladeluftkühler sekundärseitig in voneinander unabhängige Kühlkreise integriert sind, von denen mindestens einer nicht mit einem mit dem Motor in Verbindung stehenden Primärkühlkreislauf in Fluidverbindung steht. In diesen beiden Kreisläufen kann vorgesehen sein, dass die beiden jeweiligen Umwälzpumpen und Wärmetauscher, durch die die aus dem jeweiligen Kühlkreislauf an den Abwärmequellen des Motors abgetragene thermische Leistung an die Umgebungsluft abgeführt wird, voneinander getrennt sind.

Es kann vorgesehen sein, dass der vom primären Kühlkreislauf des Motors abgetrennte Kühlkreis, der auch als Niedertemperaturkreislauf bezeichnet wird, über eine Umwälzpumpe verfügt, die bevorzugterweise bedarfsgerecht betrieben wird, und somit der abgetrennte Kühlkreislauf mit einer definierbar variablen Kühlleistung betrieben werden kann. So kann diese Umwälzpumpe und/oder ein Ventilator am äusseren Wärmetauscher, über den der Niedertemperaturkühlkreislauf thermische Leistung an die Umgebung abführt beispielsweise über eine gesteuerte bzw. geregelte E-Maschine angetrieben werden, sodass der Niedertemperaturkühlkreislauf eine sehr geringe Vorlauftemperatur und einen sehr hohen Kühlmittelmassenstrom nur dann bereitstellt, wenn dies notwendig ist bzw. nur dann erfolgt, wenn aus diesem hierfür erforderlichen Energieaufwand ein entsprechender Mehrwert für den Motor in einer Gesamtsystembetrachtung gezogen wird.

Nach einer optionalen Fortbildung der vorliegenden Erfindung kann vorgesehen sein, dass zur Kühlung der Ladeluft eine Wassereinspritzvorrichtung zum Einspritzen von Wasser in den Ladeluftpfad vorgesehen ist, wobei vorzugsweise das in den Ladeluftpfad eingespritzte Wasser ein Kondensat aus dem Abgas ist.

Demnach kann also ein aus dem Abgas gewonnenes Wasser zur Kühlung von Ladeluft genutzt werden. Dazu kann eine Wassereinspritzvorrichtung vorgesehen sein, die Wasser in den Ladeluftpfad einspritzt, um die Ladeluft zu kühlen.

Nach der Erfindung kann vorgesehen sein, dass die einstufige oder die mehrstufige Aufladung in ihrer Leistung variierbar ist, vorzugsweise durch einen steuer- und/oder regelbaren Verdichter. Beispielsweise kann dies durch einen Abgasturbolader mit einem individuell ansteuerbaren Waste-Gate, einen Turbolader mit einer variablen Turbinengeometrie, einen mit einem elektrischen Antrieb angetriebenen Lader etc. umgesetzt werden. Eine solche bedarfsgerechte Aufladung verhindert unnötig starke Aufladungen im unteren und mittleren Lastbereich des Motors und spart demzufolge Energie.

Nach einer Variante der Erfindung kann vorgesehen sein, dass der Kraftstoffinjektor dazu ausgelegt ist, Wasserstoff mit einem Druck im Bereich von 200 bis 500 bar, vorzugsweise 200 bis 400 bar, bevorzugterweise 250 bis 350 bar und ganz besonders bevorzugt im Bereich von 290 bis 310 bar einzuspritzen. Ein beispielhafter Wert für einen Druck zum Einspritzen von Kraftstoff durch den Kraftstoffinjektor liegt bei 300 bar.

Die Erfindung betrifft zudem ein Verfahren zum Steuern eines vorstehend beschriebenen Fahrzeugs, das mit einem aktiv ansteuerbaren Ventil in der Trennwand von Vorkammer und Hauptbrennraum versehen ist, wobei das Ventil kurz vor dem Ende der über den Injektor erfolgenden Kraftstoffzufuhr geschlossen wird, damit der zum Schluss in den Hauptbrennraum zugeführte Kraftstoff vollständig durch die Überströmkanäle strömt, um für eine zusätzliche Verwirbelung eines Gemisches in dem Hauptbrennraum zu sorgen.

Diese zusätzliche Verwirbelung sorgt für eine besonders gute Durchmischung des Gemisches in der Vorkammer und sorgt demnach für ein gleichmässiges und zugleich möglichst optimales Strahlbild der aus der Vorkammer hinausschiessenden Zündfackeln.

Ferner kann vorgesehen sein, dass das Ventil während einer Kompressionsphase des Zylinders vorübergehend geöffnet wird, um in der Vorkammer eine dadurch gesteigerte Erhöhung der Verbrennungsluftzahl Lambda zu erwirken, sofern dies funktionstechnisch vorteilhaft ist bzw. auch um den Einsatz solcher Kraftstoff zu ermöglichen, deren Zündfähigkeit dies erfordert.

Die Erfindung betrifft zudem ein On-road oder Off-road Fahrzeug, insbesondere eine mobile Arbeitsmaschine mit einem Motor nach einem der vorhergehenden vorgestellten Varianten.

Weitere Vorteile, Merkmale und Einzelheiten der Erfindung werden aufgrund der nachfolgenden Figurenbeschreibung ersichtlich. Dabei zeigen:
- Fig. 1:: ein erklärendes Diagramm im Zusammenhang eines Gemisches in einem Brennraum,
- Fig.2:: eine schematische Darstellung einer Zylinderanordnung eines herkömmlichen Motors mit Direkteinspritzung und gespülter Vorkammer,
- Fig. 3:: eine schematische Darstellung einer Zylinderanordnung eines erfindungsgemäßen Motors,
- Fig. 4:: eine schematische Darstellung einer bevorzugten Ausführungsform der vorliegenden Erfindung,
- Fig. 5:: eine schematische Darstellung einer Detailansicht einer Ausgestaltung einer Vorkammer,
- Fig. 6:: ein Diagramm zur Erläuterung der Druckwerte und der Lambda-Werte in der Vorkammer während eines Teilarbeitszyklus des Motors,
- Fig. 7:: ein Ausführungsbeispiel der vorliegenden Erfindung mit einer mehrstufig aufgeladenen Luftzufuhr und einer mehrstufigen Ladeluftkühlung, und
- Fig. 8:: zwei Darstellungen eines in der Trennwand angeordneten Ventils in unterschiedlichen Zuständen.

Fig. 1 zeigt verschiedene Auswirkungen bei Veränderungen des Verbrennungsluftverhältnisses Lambda für die Kraftstoffe Erdgas und Wasserstoff.

Bekanntermassen führt das Betreiben von Motoren im Bereich der stöchiometrischen Verbrennung bei steigendem Luftüberschuss bzw. Sauerstoffüberschuss zu einer Erhöhung von Stickoxid-Emissionen.

Ein zunehmend starker Luftüberschuss erhöht die Klopfgrenze von fremdgezündeten Motoren, was zu einer Wirkungsgradsteigerung genutzt werden kann. Letzteres gilt auch noch fernab der stöchiometrischen Verbrennung - d.h. bei Lambda-Werten deutlich grösser als 1, weswegen man sich bei dauerhaft unter hohen Leistungen betriebenen Motoren und/oder bei Motoren mit langen Laufzeiten, häufig für einen hohen Luftüberschuss (Lambda zwischen 1,2 bis 1,5), eine sogenannte starke Abmagerung entscheidet.

Die deutlich erhöhte Ladeluftmenge, die bevorzugterweise gekühlt wird, um zumindest eine Teilkompensation der durch das Verdichten entstandenen Erwärmung zu erzielen, sorgt für eine wirksame Reduktion der Verbrennraumtemperatur, was einen wünschenswerten Rückgang der NO_{X}-Emissionen und eine Erhöhung der Klopffestigkeit bewirkt.

Ferner kann die Klopffestigkeit durch eine sehr späte Kraftstoffeinspritzung gesteigert werden, da sich der Zeitraum in dem eine ungewollte resp. unkontrollierte lokale Zündung erfolgen könnte, extrem stark verkürzt wird.

Das beliebige Anheben von Lambda, also das Zusetzen von Luft für eine verbesserte Verbrennung ist auch praktischen Grenzen unterworfen, da ein zu hoher Luftanteil im Gemisch zu Zündaussetzern führen kann. Dieses sogenannte Misfiring stellt den erfolglosen Vorgang einer koordinierten Zündung dar, was zu Leistungs- und Wirkungsradverlusten und/oder erhöhten Rohemissionen und/oder dem Risiko unkoordinierter verspäteten Zündungen mit entsprechenden Folgenachteilen führt.

Die oben geschilderten Zusammenhänge gelten generell für Gasmotoren und insbesondere auch für Wasserstoffmotoren.

Zudem ergibt sich für kohlenstoffhaltige Kraftstoffe mit zunehmendem Lambda ein Emissions-Anstieg unverbrannter bzw. teilverbrannter Kohlenwasserstoffe, deren Abbau in einer Abgasnachbehandlung weitaus weniger aufwendig als die Reduktion von Stickoxiden ist.

Vor diesem Hintergrund besteht das Bestreben eines Motorbetriebs unter hohen Lambda-Werten. Dies gilt insbesondere auch für Wasserstoff, da seine Zündfähigkeit einen sehr viel größeren Lambda-Bereich umfasst als jener von Erdgas.

Bei fremdgezündeten Motoren wird die zur Auslösung der Zündung in dem Brennraum erforderliche Aktivierungsenergie von aussen eingebracht; zumeist mit einer Zündkerze. Damit steht zunächst nur eine vergleichsweise geringe Menge an Aktivierungsenergie bereit, weswegen eine vergleichsweise hohe Zündfähigkeit des Gemisches essentiell ist. Ferner, ist eine ausreichend hohe Brenngeschwindigkeit essentiell, um auch höhere Motordrehzahlen erreichen zu können.

Die Ausbreitung des Zündfunkens und damit der Bereich, in dem die primäre Zündenergie im Brennraum eingebracht wird, ist kaum reproduzierbar. Nach dem heutigen Stand der Technik weicht die Flammausbreitung im Brennraum eines fremdgezündeten Motors unter Vorliegen einer vergleichsweise weiten Streuung stark von dem Idealvorgang ab.

Durch den Einsatz von Vorkammerzündsystemen, können einige der zuvor erläuterten Nachteile, die sich aus einer starken Abmagerung ergeben, zumindest teilweise kompensiert werden.

Das Volumen des Hauptbrennraums übertrifft das Innenvolumen seiner zugehörigen Vorkammer um Größenordnungen. Daher stellt der Energieinhalt eines Zündfunkens einer gewöhnlichen Zündkerze einen adäquaten Anteil der Aktivierungsenergie für das Zünden des gesamten sich in der Vorkammer befindenden Gemisches dar. Das in der Vorkammer entzündete Gemisch, welches wiederum ein Vielfaches der Energie eines Zündkerzen-Zündfunken freisetzt, schiesst durch die Überströmkanäle in den Hauptbrennraum ein und sorgt dort für ein multiples Zünden an unterschiedlichen Orten und das innerhalb eines kurzen Zeitraums.

Eine ungespülte Vorkammer erhält ihr Gemisch im Zuge der Verdichtung während der Kompressionsphase des Zylinders. Abgesehen von einer geringen Restmenge komprimierten Abgases ergibt sich die Zusammensetzung des Gemisches in der Vorkammer durch die Vorgänge in dem Hauptbrennraum. Die Kraftstoffzuführung in den Hauptbrennraum muss rechtzeitig vor dem Auslösen des Zündfunkens erfolgen, damit im Zuge der Kompression eine ausreichende Versorgung der Vorkammer sichergestellt ist.

Eine gespülte Vorkammer verfügt hingegen über eine eigene Kraftstoffzuführung. Die Luftzufuhr in die Vorkammer erfolgt gleichermaßen über die im Hauptbrennraum erfolgende Verdichtung. Die Luft- bzw. Sauerstoffzufuhr für die Vorkammer erfolgt also über das Gemisch aus dem Hauptbrennraum. Bevorzugt erfolgt die Kraftstoffzuführung in die Vorkammer zu einem späten Zeitpunkt. Dadurch können auch solche Lambda-Werte, die besonders zündfähig sind (Lambda = 1 oder ein geringer Luftüberschuss), beherrschbar sein, weil der Zeitraum bis zum definierten Auftreten des von der Zündkerze ausgelösten Zündfunkens entsprechend kurz ist und daher kein selbsttätiges Zünden aufgrund von ggf. vorhandenen heißen Flecken an der Vorkammerwand erfolgt.

In Bezug auf dynamisch betriebene Motoren, insbesondere Gasmotoren, kann unabhängig vom momentanen Betriebspunkt des Motors, eine gespülte Vorkammer unter einem nahezu gleichbleibenden Verbrennungsluftverhältnis betrieben werden, welches für das dortige Zünden des Gemisches in der Vorkammer besonders vorteilhaft ist.

Der weitaus größte Teil der Energieumsetzung erfolgt im Hauptbrennraum, der vorzugsweise auf einen Magerbetrieb eingestellt ist, damit die besagten Vorteile eines hohen Wirkungsgrads und niedriger Rohemissionen dort voll zum Tragen kommen. Lediglich die etwa 1 % betragende Energieumsetzung (der Gesamtenergie des Verbrennungsvorgangs eines Zylinders) in der Vorkammer zum Bereitstellen der Zündenergie für das Gemisch erfolgt ggf. unter schlechten Wirkungsgraden und ggf. erhöhten Rohemissionen.

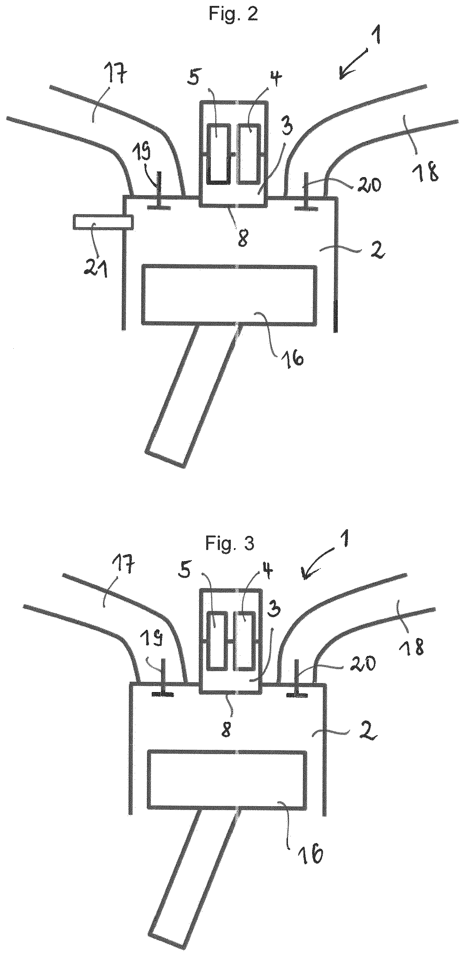

Fig. 2 zeigt nun eine schematische Darstellung eines Motors 1 mit einem zugehörigen Hauptbrennraum 2. Darin ist ein verschieblich gelagerter Kolben 16 angeordnet, der das im Hauptbrennraum 2 vorhandene Gemisch stark komprimieren kann. Wie üblich, weist die Anordnung 1 einen Lufteinlass 17 und einen Luftauslass 18 auf, die über entsprechende Ventile 19, 20 verschließbar sind. Hierüber wird bei einer entsprechenden Stellung des mindestens einen Einlassventils 19 Frischluft in den Hauptbrennraum 2 eingeführt und über das mindestens eine Auslassventil 20 der weitaus überwiegende Anteil des Verbrennungsabgases nach der Verbrennung aus dem Hauptbrennraum 2 ausgeleitet.

Ebenfalls mit dem Hauptbrennraum 2 in fluidischer Verbindung steht die Vorkammer 3, die über eine mit Durchgängen versehene Trennwand 8 separiert ist. In dieser Vorkammer 3 befinden sich eine Zündvorrichtung 4, bspw. eine Zündkerze, sowie ein Injektor 5. Da Kraftstoff direkt in die Vorkammer 3 über den Injektor 5 eingebracht wird, handelt es sich bei der vorliegenden Darstellung um eine gespülte Vorkammer 3, die mitunter auch als aktive Vorkammer bezeichnet wird.

Gemäss dem Stand der Technik wird der Kraftstoff für das im Hauptbrennraum 2 zu entzündende Gemisch über einen im Hauptbrennraum angeordneten Injektor 21 eingebracht.

Fig. 3 zeigt eine Ausführungsform der Erfindung, die sich durch das Vorhandensein von nur einem Injektor 5 auszeichnet, der in der Vorkammer 3 angeordnet ist bzw. in diese hineinragt und daher der Kraftstoff in die Vorkammer 3 eingespritzt wird. Nach der Erfindung wird auch der für den Hauptbrennraum erforderliche Kraftstoff aus dem in die Vorkammer 3 hineinragenden Injektor 5 ausgegeben, so dass der Kraftstoff erst von der Vorkammer 3 in den Hauptbrennraum 2 strömen muss. Das bedeutet in gewisser Weise, dass aus der Perspektive des Hauptbrennraums 2 während der Kraftstoffbeschickung des Hauptbrennraums 2 die Überströmkanäle 6 der Vorkammer 3 die Funktion der Injektordüsen übernehmen; nicht aber die vollständige Funktion des Injektors.

Da nun kein weiterer Injektor 21 vorgesehen ist, kann die Vorkammer 3 an einer Position angeordnet sein, die für das Einströmen des Kraftstoffs in den Hauptbrennraum 2 und für das Einschiessen der Zündfackeln in den Hauptbrennraum 2 vorteilhaft ist. Zudem wird die erforderliche Anzahl an Bauteilen signifikant gesenkt, da nunmehr ein Injektor weniger vorhanden ist und natürlich auch die damit einhergehende Zuleitung und Ansteuerung entfallen.

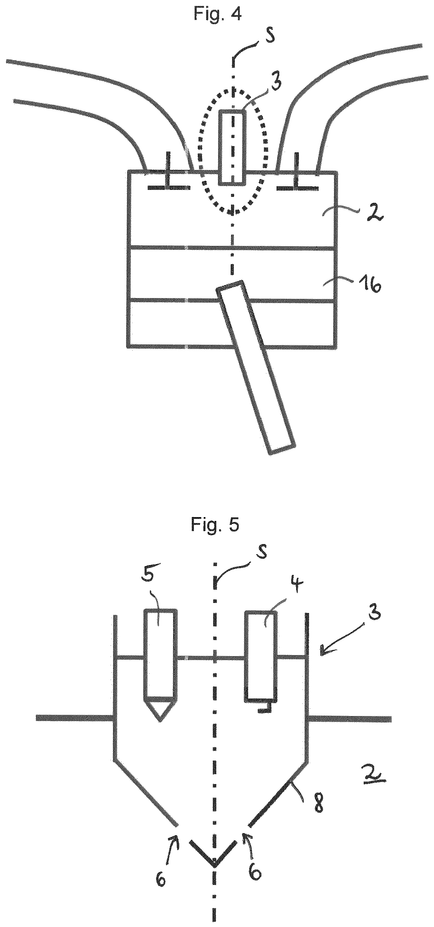

Fig. 4 zeigt dabei eine vorteilhafte Ausgestaltung der Erfindung, bei der die Vorkammer 3 in der Symmetrieachse S des Hauptbrennraums 2 angeordnet ist, so dass es beim Ausströmen von Kraftstoff von der Vorkammer 3 in den Hauptbrennraum 2 zu einer besonders gleichmäßigen Verteilung von Kraftstoff in dem Hauptbrennraum 3 kommt. Diese Anordnungsposition der Vorkammer 3 ist von besonderem Vorteil, da auch die aus den Überströmkanälen herausschiessenden Zündfackeln so zu einem gleichmäßigen Entflammen des Gemisches im Hauptbrennraum 2 führen können.

Fig. 5 zeigt eine vergrößerte Ansicht der Vorkammer 3 bei der man nun auch die Überströmkanäle 6 (teilweise auch Schusskanäle genannt) gut erkennen kann, die die Vorkammer 3 mit dem Hauptbrennraum 2 durch die Trennwand 8 hindurch verbinden. In das Innere der Vorkammer 3 ragt das Auslassende eines Injektors 5 hinein, der nicht nur den Kraftstoff für die Zündung der Vorkammer 3, sondern auch eine hochgenau dosierte Kraftstoffmenge für den Verbrennungsvorgang in dem Hauptbrennraum 2 bereitstellt. Weiter ist dort zudem auch eine Zündkerze 4 vorgesehen, deren Funkenstrecke in der Vorkammer 3 ausgebildet ist, die bspw. durch einen gezielten Funkenüberschlag eine Entzündung des Gemisches in der Vorkammer 3 ausführen kann.

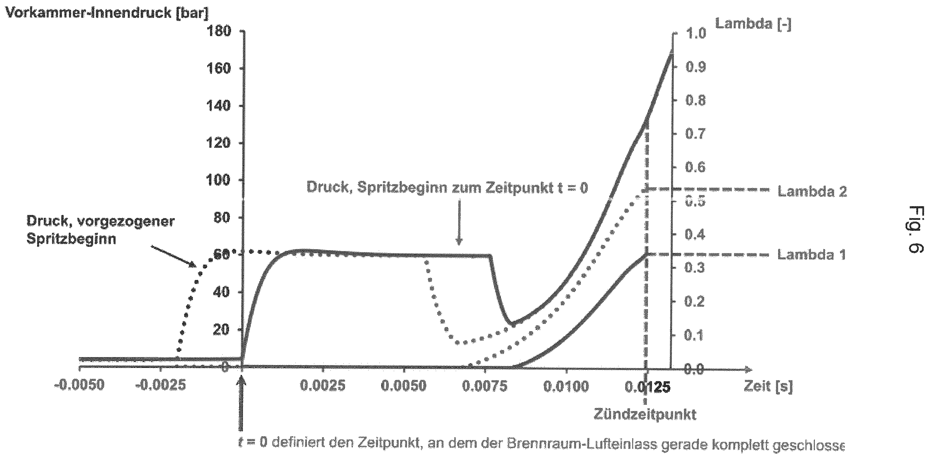

Fig. 6 zeigt die Zeitverläufe des Vorkammer-Innendrucks und des Verbrennungsluftverhältnis Lambda des Vorkammer-Gemisches bei zwei Abläufen mit unterschiedlichen Einspritzzeitpunkten.

In der Darstellung sind die Zeitverläufe dieser beiden Arbeitsspiele derart übereinandergelegt, dass die festgelegte Zeit t=0 genau dem Zeitpunkt entspricht, an dem die Lufteinlassventile 19 sich gerade komplett geschlossen haben.

Genau zu diesem Zeitpunkt erfolgt der Kraftstoff-Spritzbeginn im Fall des über der Zeit mit der durchgezogenen Linie aufgetragenen Druckverlaufs. Bei dem anderen Arbeitsspiel mit der gepunkteten Linie erfolgt der Kraftstoff-Spritzbeginn bereits vor dem Verschliessen der Lufteinlassventile. Dem Fachmann ist klar, dass ein vorgezogener Kraftstoff-Spritzbeginn erst kurz vor dem Schliessen des Lufteinlasses erfolgen darf, da ansonsten bei einer Hochdruckeinspritzung Kraftstoff in den Lufteinlass 17 gelangen könnte.

Zunächst soll das Diagramm anhand der durchgehenden Linien beschrieben werden, bei der eine Einspritzung von Kraftstoff genau dann beginnt, wenn der Lufteinlass des Hauptbrennraums 2 geschlossen ist.

Man erkennt, dass bereits vor dem Kraftstoff-Spritzbeginn in der Vorkammer 3 ein gewisser Innendruck vorliegt, was auf den Luftdruck der Ladeluft zurückzuführen ist.

Bereits kurz nach dem Kraftstoff-Spritzbeginn wird das in der Vorkammer 3 von der vorausgegangenen Expansionsphase verbliebene Abgas von dort quasi vollständig in den Hauptbrennraum 2 verdrängt. Der Einfluss dieser Abgasmenge im Hauptbrennraum 2 ist aufgrund der geringen Menge vernachlässigbar, da diese Menge aus dem im Vergleich zum Brennraum 2 sehr viel kleineren Volumen der Vorkammer 3 herrührt.

Fast unmittelbar nach dem Einsetzen der Kraftstoffeinspritzung befindet sich in der Vorkammer 3 ausschliesslich Kraftstoff. Folglich liegt das Verbrennungsluftverhältnis Lambda beim Wert 0. Der in die Vorkammer 3 eingespritzte Kraftstoff gelangt über die in der Trennwand 8 vorhandene Fluidverbindung, die aus mindestens einem sogenannten Überströmkanal 6 besteht, in den Hauptbrennraum 2. Dort steigt das Verbrennungsluftverhältnis Lambda ab dem Zeitpunkt an, an dem die Kraftstoffeinspritzung unterbrochen worden ist an. Diesen Zeitpunkt lässt sich der Grafik anhand des plötzlichen Druckabfalls erkennen (für die durchgehende Linie bei 0,0075 s).

Da der Gesamtquerschnitt der Überströmungskanäle 6 zwischen der Vorkammer 3 und dem Hauptbrennraum 2 entsprechend klein ist, besteht während der Kraftstoffeinspritzung in der Vorkammer 3 ein Druck von ca. 60 bar, der während dieses Zeitraums höher als der Druck im Hauptbrennraum 2 ist, wodurch nach dem Ende des Einspritzvorgangs in der Vorkammer 3 zunächst ein dortiger Druckabfall einsetzt. Mit dem Fortschreiten der Kolbenbewegung im Hauptbrennraum 3 sich die Gemisch-Verdichtung weiter fort und bewirkt schliesslich das Überströmen von Gemisch aus dem Hauptbrennraum 2 in die Vorkammer 3.

Der sich nach dem Entzünden des Gemisches fortsetzende Anstieg des Vorkammer-Innendrucks erklärt sich aus der Expansion des entzündeten Gemisches und führt zum Zurückdrängen des Kolbens in Richtung unteren Totpunkt.

Zwingenderweise muss die Kraftstoffeinspritzung vor dem Ende des Kompressionstaktes des Zylinders abgeschlossen sein, weil der Vorkammer 3 eine gewisse Menge des sich im Hauptbrennraum 2 befindenden Gemisches zugeführt werden muss, damit der zur Vorkammer-Zündung erforderliche Sauerstoff vorhanden ist.

In dem besagten Diagramm erkennt man einen Anstieg des Verbrennungsluftverhältnisses Lambda beginnend vom Wert 0 und zwar genau zu dem Zeitpunkt an dem der zuvor erklärte plötzliche Druckabfall in der Vorkammer einsetzt. Bevor die Zündung über die Zündkerze 4 ausgelöst wird, kann die Konditionierung der Vorkammerladung auf zwei unterschiedliche Varianten abgeschlossen werden

In der ersten Variante, welche durch das Diagramm der Fig. 6 repräsentiert ist, ergibt sich diese Konditionierung einzig und allein aus den Rückwirkungen des (i) Gemisch-Zustands (Lambda, Druck, Temperatur etc.) im Hauptbrennraum 2 zum Ende der Kraftstoffeinspritzung und (ii) der Gemisch-Zustandsänderung im Hauptbrennraum 2 aufgrund der fortdauernden Kompression, welche zum Überströmen eines gewissen Anteils von Gemisch aus dem Hauptbrennraum 2 in die Vorkammer 3 führt. Aufgrund des extrem geringen Anteils des aus dem Hauptbrennraum 2 in die Vorkammer 3 verdrängten Gemisches hat dies für das sich im Hauptbrennraum 2 befindende Gemisch keine Bedeutung. Für die Vorkammer 3 ist diese Verdrängung jedoch fundamental wichtig, da auf diese Weise Luft in die Vorkammer 3 gelangt und sich in Abhängigkeit davon das Verbrennungsluftverhältnis Lambda in der Vorkammer 3 einstellt, das durch den Zündfunken entflammt wird und seinerseits die Zündenergie in den Hauptbrennraum 2 einträgt.

In dem Diagramm liegt für den Fall, dass die Einspritzung genau mit dem Schließen des Lufteinlasses zusammenfällt, ein Verbrennungsluftverhältnis Lambda von ca. 0,33 vor.

In der Ausführung mit den gepunkteten Linien, bei dem die Kraftstoff-Einspritzung bereits beginnt bevor der Lufteinlass 17 komplett geschlossen ist, weist das Verbrennungsluftverhältnis Lambda zum Zündzeitpunkt einen Wert von ca. 0,53 auf.

Die Zeiträume innerhalb derer diese Vorgänge erfolgen, können jedoch derart kurz sein, dass auch in einem kleinen Volumen wie einer Vorkammer 3 das Verbrennungsluftverhältnis Lambda nicht homogen ist. Daher eignet sich der Grundgedanke der Erfindung insbesondere für einen Wasserstoffmotor. Denn ein Wasserstoff-Luftgemisch ist bereits bei einem sehr geringen Luftanteil (bis zu einem minimalen Lambda von 0,15) zündfähig, wohingegen dieses Auslegungsbeispiel mit Lambda-Werten kleiner als 0,7 für einen mit Erdgas (Methan) betriebenen Gasmotor ungeeignet wäre.

In einer zweiten Variante führt nicht allein die besagte vom Hauptbrennraum 2 ausgehende Rückwirkung in die Vorkammer 3 zur dortigen Konditionierung des Gemisches, sondern es ist eine weitere Beeinflussung vorgesehen, indem nachdem bereits Gemisch von dem Hauptbrennraum 2 in die Vorkammer 3 verdrängt worden ist, nochmals eine sehr kurz andauernde weitere Kraftstoff-Einspritzung erfolgt. Allerdings sollte es sich hierbei um eine sehr kleine Einspritzmenge handeln, da ansonsten ein zu grosser Anteil der in der Vorkammer 3 befindlichen Luft herausgedrängt werden würde. Eine solche unmittelbar vor dem Zündzeitpunkt erfolgende Einspritzung könnte einem Feinabgleich des Verbrennungsluftverhältnisses Lambda in der Vorkammer 3 dienen oder anders formuliert, eine lokale Erhöhung des Kraftstoffanteils in einem Teilbereich der Vorkammer 3 bezwecken.

Die in Fig. 6 gezeigten Verläufe betreffen einen Wasserstoffmotor in dem Arbeitspunkt seiner maximalen Abgabeleistung von 450 kW bei einer Drehzahl von 1900 min⁻¹ und damit um eine Konstellation, die für das erfindungsgemässe System sehr anspruchsvoll ist. In diesem Arbeitspunkt muss die maximale Kraftstoffmenge von dem in die Vorkammer 3 einspritzenden Injektor 5 über die Überströmkanäle 6 in den Hauptbrennraum 2 zugeführt werden. Dabei muss dieser Vorgang rechtzeitig abgeschlossen sein, sodass noch eine ausreichend hohe Menge an Gemisch von dem Hauptbrennraum 2 in die Vorkammer 3 verdrängt wird. Ferner muss in dem Hauptbrennraum zur Abdeckung der hohen Drehzahl eine ausreichend hohe Brenngeschwindigkeit auftreten. Die Einspritzrate beträgt ca. 11,5 g/s, die Einspritzdauer ca. 7,63 ms (und die innerhalb eines solchen Arbeitstakts verbrauchte Wasserstoffmenge ca. 0,088 g).

Bei einem Motorbetrieb nach der ersten Variante ist die Konditionierung der Vorkammerladung mit dem Einspritzbeginn der letzten Teileinspritzung vorherbestimmt, weil das Ende dieses Einspritzvorgangs durch die dem Hauptbrennraum 3 zuzuführende Kraftstoffmenge bereits festgelegt ist.

Nach der zweiten Variante ist eine flexible Absenkung des Verbrennungsluftverhältnisses Lambda, d.h. eine Steigerung des Kraftstoffanteils in der Vorkammer 3 möglich.

Damit die in der zweiten Variante durch solche entsprechenden Eingriffe möglichen Verbesserungspotenziale genutzt werden können, ist eine entsprechende Sensorik durch Hardware und/oder Software vorteilhaft oder nötig. Die besagte Aktuatorik und die Sensorik ist dann Bestandteil einer oder mehrerer Steuerungen und/oder Regelungen. Bevorzugt besteht zumindest ein Teil dieser Steuerungen und/oder Regelungen als Software, die wiederum auf einer Recheneinheit implementiert ist. Diese Software beinhaltet dann die bspw. benötigten virtuellen Sensoren in Form von Rechenmodellen und/oder Zustandsschätzern sowie Kennfelder, Regler, Parameter etc. Besonders bevorzugt übernimmt das Motorsteuergerät die Funktion dieser Recheneinheit. Selbstverständlich kann diese Recheneinheit auch auf physisch unterschiedlichen Steuergeräten verteilt sein.

Mögliche Eingangsgrössen einer solchen Software sind: Kurbelwellensensor, Nockenwellensensor, Raildruck, der Ausgangswert einer Höhendruckdose, Temperaturen (Luftstrecke am Ausgang des Ladeluftkühlers, Abgassammler Öl, Kühlwasser, etc.)

Mögliche Rechengrössen, die wiederum als Eingangsgrössen bestimmter Teilmodelle dienen, sind: Kurbelwellen-Phasenwinkel, Motordrehzahl, Kraftstoff-Solleinspritzmenge, Brennraum-Innendruck, etc.

Die Anwendung des erfindungsgemässen Systems ist vor allem für die verbrennungsmotorische Nutzung von Wasserstoff bzw. eine solche Nutzung von Kraftstoffgemischen, die einen hohen Anteil von Wasserstoff enthalten und sonstiger Kraftstoffe, deren Zündfähigkeit eine entsprechend grosse Bandbreite über das Verbrennungsluftverhältnis Lambda aufweist, vielversprechend.

Angestrebt wird ein Einsatz des erfindungsgemässen Systems in einem Motor 1, der vorzugsweise in einem extremen Magerbetrieb arbeitet. Es wird ein Verbrennungsluftverhältnis von Lambda = 3 (d.h. ein dreifacher SauerstoffÜberschuss) oder gar ein Verbrennungsluftverhältnis, welches der Zündfähigkeits-Grenze von Wasserstoff (Lambda = 10,5) erheblich näherkommt. Insbesondere wird der Motor 1 mit Wasserstoff betrieben oder einem Kraftstoff, der Wasserstoff als Hauptkomponente oder als Beimischung enthält oder es sich um einen Wasserstoff-ähnlichen Kraftstoff handelt oder es sich um einen sonstigen Kraftstoff handelt, der eine Zündfähigkeit für Lambda oberhalb 2,5 aufweist und besonders bevorzugt eine Zündfähigkeit für Lambda gleich oder oberhalb von 3 aufweist und ganz besonders bevorzugt eine Zündfähigkeit für Lambda gleich oder oberhalb von 5 aufweist.

Der hohe Luftüberschuss bewirkt eine entsprechend starke Anhebung der Klopfgrenze, was zur Erhöhung des Kompressionsverhältnisses ausgenutzt wird, um eine Wirkungsgradsteigerung zu erzielen. Allerdings stellt nicht nur die Klopffestigkeit eine Limitierung des Kompressionsverhältnisses dar, sondern auch die Belastbarkeit der Vorkammer. Im Fall, dass der Motor mit Wasserstoff betrieben wird oder einem Kraftstoff, der Wasserstoff als Hauptkomponente oder als Beimischung enthält oder es sich um einen Wasserstoff-ähnlichen Kraftstoff handelt liegt das Kompressionsverhältnis bevorzugt zwischen 11 und 20, besonders bevorzugt zwischen 11 und 17 und ganz besonders bevorzugt zwischen 12 und 15.

Für einen solchen extrem abgemagerten erfindungsgemässen Motor 1 ist eine extrem starke Aufladung nötig, damit dieser eine vergleichbar hohe Leistungsdichte erreicht, wie ein nah bei dem stöchiometrischen Verbrennungsluftverhältnis von Lambda = 1 betriebener und ansonsten vergleichbarer Motor 1. Demzufolge wird für einen erfindungsgemässen Motor 1 eine mehrstufige Aufladung bevorzugt; besonders bevorzugt in Ergänzung mit mindestens einem Ladeluft-Zwischenkühler.

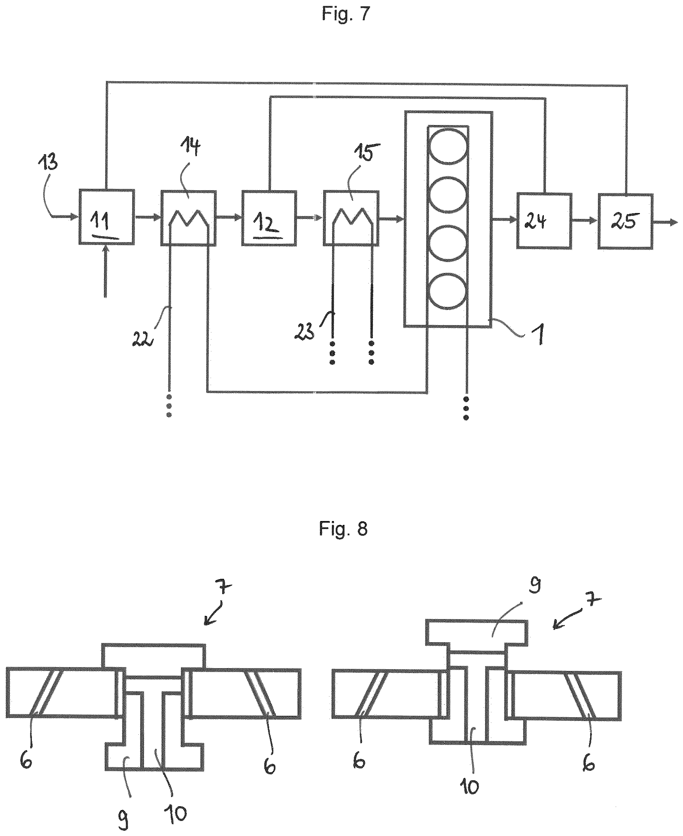

Ein Ausführungsbeispiel eines als solchen bekannten Konzepts zeigt die Fig. 7. Es handelt sich um eine zweistufige Aufladung 11, 12 mit einer zweistufigen Kühlung 14, 15 bei der die im ersten Verdichter 11 komprimierte Ladeluft zunächst durch einen Ladeluftkühler 14 geleitet wird sowie daran anschliessend in einem zweiten Verdichter 12 nochmals komprimiert und im nachgeschalteten Ladeluftkühler 15 nochmals gekühlt wird.

Zwischen den beiden seriell im Ladeluftpfad 13 angeordneten Verdichtern 11, 12 ist das Vorhandensein eines Ladeluftkühlers 14 vorgesehen, den man als Ladeluft-Zwischenkühler bezeichnet. Ganz besonders bevorzugt befindet sich zwischen jeweils zwei entlang des Luftladepfads 13 seriell angeordneten Verdichtern 11, 12 mindestens ein sogenannter Ladeluft-Zwischenkühler 14. Ebenso besonders bevorzugt ist zumindest einer dieser Ladeluftkühler 14 ,15 sekundärseitig mit einem Niedertemperaturkreislauf 23 verbunden. Das ist ein vom primären Kühlkreislauf 22 des Motors 1 abgetrennter Kühlkreis. Wenn ein solcher Niedertemperatur-Kühlkreislauf 23 vorhanden ist, dann bezeichnet man den primären Kühlkreislauf auch als Hochtemperatur-Kühlkreislauf 22. In diesen beiden Kühlkreisläufen 22, 23 sind dann die beiden jeweiligen Umwälzpumpen und Wärmetauscher, durch die die aus dem jeweiligen Kühlkreislauf 22, 23 an den Abwärmequellen des Motors 1 abgetragene thermische Leistung an die Umgebungsluft abgeführt wird, voneinander getrennt.

Aufgrund der vergleichsweise geringen Vorlauftemperatur erfordert der Betrieb des Niedertemperatur-Kühlkreislaufs 23 eine vergleichsweise hohe Leistung, weswegen ein bedarfsgerechter Betrieb seiner Umwälzpumpe und/oder des Ventilators, der die Wärmeabfuhr an die Umgebungsluft unterstützt, bevorzugt wird.

Anstelle eines einstufigen Ladeluftkühlers 15 könnte ein zweistufiger Ladeluftkühler 15' zum Einsatz kommen, wobei die Sekundärseite einer ersten Stufe bevorzugt am Hochtemperatur-Kühlkreislauf 22 angeschlossen ist und die Sekundärseite der zweiten Stufe bevorzugt am Niedertemperatur-Kühlkreislauf 23 angeschlossen ist.

Als zusätzliche Kühlung kann dem Ladeluftpfad 13 eine gewisse Menge an Wasser eingespritzt werden. Dabei kann das Wasser als Kondensat aus dem Abgas gewonnen werden.

Bevorzugt wird ein Konzept der Aufladung, welches eine besonders bedarfsgerechte Aufladung ermöglicht, da aufgrund der Anforderung hohe Aufladungen erzielen zu können, eine unnötig starke Aufladung im unteren und mittleren Motor-Teillastbetrieb zu nennenswerten unnötigen Energiezuführungen nach sich ziehen würde. Demzufolge kommt zur Verdichtung der Ladeluft bevorzugt mindestens ein steuer- bzw. regelbarer Verdichter zum Einsatz; bspw. ein Abgasturbolader mit einem individuell ansteuerbaren Waste Gate und/oder ein Turbolader mit einer variablen Turbinengeometrie (ein sogenannter VTG Lader) und/oder ein über einen Elektromotor und/oder mechanisch von einem Nebenabtrieb des Motors angetriebener Lader etc. zum Einsatz.

Die Verwendung von Vorkammern für Wasserstoffmotoren ist keineswegs abwegig, weil die Zündung von Wasserstoff entgegen der landläufigen Meinung nicht völlig unkompliziert ist. Zwar ist die Zündenergie für ein Wasserstoff-Luft-Gemisch extrem niedrig, aber die erforderliche Zündtemperatur ist mit 585° C vergleichsweise hoch. Aufgrund der besagten Vorteile wird ein Betrieb mit einem extrem hohen Luftüberschuss angestrebt, was wiederum die Bereitstellung zur Zündung von Wasserstoff ausreichend hoher Temperatur erschwert.

Die erwähnte starke Zunahme der Kohlenwasserstoff-Emission bei einer hohen Abmagerung ist bei Wasserstoffmotoren quasi irrelevant, da in den Brennraum lediglich extrem geringe Kohlenstoffmengen gelangen können und zwar aufgrund von Verunreinigungen im Wasserstoff und aus marginal vorhandenem verbranntem Motorenöl.

Die aufgrund der starken Abmagerung geringen Emissionen von Stickoxiden werden bei der erfindungsgemässen Ausgestaltung als Wasserstoffmotor voll wirksam. Daher steckt in dem erfindungsgemässen Wasserstoffmotor ein hohes Potenzial zur Vereinfachung seiner Abgasnachbehandlung oder gar die Möglichkeit komplett auf eine Abgasnachbehandlung verzichten zu können. Sofern die Laufstrecken bestimmter Filter oder Katalysatoren reduziert werden können bis hin zu einem Entfallen bietet das ein nennenswertes Potenzial zur Absenkung des Abgasgegendrucks, was wiederum eine Kraftstoffeinsparung nach sich zieht.

Die in Fig. 8 dargestellte Fortführung der Erfindung führt zu einer deutlichen bis hin zu einer vollständigen Entschärfung des Zielkonfliktes über den Gesamtströmungsquerschnitt der Verbindungen zwischen der Vorkammer 3 und dem Hauptbrennraum 2, der einerseits für das Beschicken des Hauptbrennraums 2 mit dem über die Vorkammer 3 einströmenden Kraftstoff und gleichermassen für die Luftzufuhr in die Vorkammer 3 vor dem Zündzeitpunkt eher gross sein muss, doch andererseits für das wirkungsvolle Eindringen der Zündfackeln ein geringer Gesamtströmungsquerschnitt vorteilhaft ist.

In der Fortführung befindet sich in einem Bereich der Vorkammerwand 8, die an den Hauptbrennraum 2 angrenzt bzw. in dieses hineinragt ein Ventil 7. Bevorzugt ist das Ventil 7 so angeordnet, dass die bei geöffnetem Ventil 7 auftretende Strömung symmetrisch zur Symmetrieachse S des Hauptbrennraums 2 ist.

Bevorzugt weist der bei dem geöffneten Ventil 7 zusätzliche Strömungsquerschnitt zwischen der Vorkammer 3 und dem Brennraum 2 in etwa die gleiche Grösse auf, wie der Gesamtströmungsquerschnitt der Überströmkanäle 6. Präziser formuliert sollte die bei dem geöffneten Ventil 7 zusätzlich zu Verfügung stehende Fluidverbindung in etwa so bemessen sein, dass in etwa die Hälfte der Gasströmung (je nach Zeitraum in Arbeitszyklus: a) Kraftstoff oder b) Gemisch) durch den Öffnungsquerschnitt des Ventils 7 strömt. Vorteilhaft ist, wenn beim Einströmen des Kraftstoffes von der Vorkammer 3 in den Hauptbrennraum 2 ein nennenswerter Anteil über die Überströmkanäle 6 erfolgt, weil die Überströmkanäle 6 bereits in ihrer Funktion als Schusskanal dienend derart ausgeführt sind, dass auch beim Durchströmen von Kraftstoff zur Beschickung des Hauptbrennraums 2 eine wirksame Verwirbelung vorliegt. Die gleiche Anforderung besteht auch beim Zuströmen von Gemisch in die Vorkammer 3.

In Bezug auf dieses Ventil 7 bestehen im Einsatz in einem 4-Takt Motors die Betriebssituationen a) bis f), die nachfolgend erklärt sind und mit der Angabe der bevorzugten Ventilposition ergänzt sind und zwar für den Fall, dass es sich um ein passives handelt:
a) Kraftstoffzündung und Expansion in der Vorkammer 3: Das Ventil 7 muss geschlossen sein
b) Kraftstoff-Expansion im Hauptbrennraum 2: Aufgrund der reinen Funktion ist die Ventilstellung hierbei unerheblich, jedoch erscheint es vorteilhaft, dass das Ventil 7 eine solche Position einnimmt, in der es aufgrund der starken Expansion im Hauptbrennraum 2 besser geschützt ist
c) Ausstossen des Abgases aus dem Hauptbrennraum 2: Ventilstellung ist prinzipiell unerheblich
d) Ansaugen; ggf. Ansaugen ohne Kraftstoffeinspritzung: Ventilstellung ist prinzipiell unerheblich
e) Kraftstoffeinspritzung: Innerhalb des Zeitraums in dem Kraftstoff in die Vorkammer 3 eingespritzt wird, existiert optional ein inneres Zeitfenster, in dem das Ventil 7 geöffnet ist.
f) Verdichtung im Hauptbrennraum 2 nach Abschluss der Kraftstoffeinspritzung; bevorzugt ist das Ventil 7 geöffnet: Innerhalb dieses Zeitraums existiert ein inneres Zeitfenster, in dem das Ventil 7 geöffnet ist.

Dabei kann das Verschlusselement des Ventils 7 durch ein geeignetes Federelement entsprechend vorgespannt, sodass dann, wenn das Gemisch in der Vorkammer 3 gerade gezündet hat, was gleichzeitig dem Zeitraum entspricht, in welchem der in der Vorkammer 3 herrschende Überdruck gegenüber dem im Hauptbrennraum 2 vorliegenden Druck am höchsten ist, geschlossen ist. Daher steht den Zündfackeln dieser zusätzliche Strömungsquerschnitt nicht zur Verfügung, sondern sie können sich lediglich über die Überströmkanäle ausbreiten, die daher auf ihre Funktion als sogenannte Schusskanäle zu dienen, optimiert sein können. So können diese einen ausreichend kleiner Gesamtströmungsquerschnitt, eine vorteilhafte Aufteilung auf eine günstige Anzahl einzelner Überströmkanäle 6, eine daran angepasste optimale Anordnung in der Vorkammerwand und eine angepasste Konturform aufweisen.

Anders als in der schematischen Darstellung der Fig. 8 sollte bei einem geschlossenen Ventil 7 die in die Vorkammer 3 hineinragende Stirnfläche des Ventilstössels 9 möglichst flächig mit der Innenseite der Vorkammerwand 8 abschliessen.

Beim Einsatz eines solchen Ventils 7 in einem 2-Takt Motor bestehen in Bezug auf präferierten Ventilstellungen in Abhängigkeit der Stoffströme (Kraftstoff, Gemisch und entzündetes Vorkammer-Gemisch) zwischen der Vorkammer und dem Hauptbrennraum die gleichen Zusammenhänge wie bei einem 4-Takt Motor.

Unabhängig von der Bauart des Motors 1 käme bevorzugt ein solches Ventil 7 zum Einsatz, welches ansteuerbar geöffnet und geschlossen werden kann.

Sodann würde besonders bevorzugt das Ventil 7 (kurz) vor dem Ende der Beschickung des Hauptbrennraums 2 schliessen, damit die zum Schluss in den Hauptbrennraum 2 zugeführte Kraftstoffmenge vollständig durch die Überströmkanäle 6 geleitet wird und daher für eine zusätzliche Verwirbelung sorgt zum Vorteil einer besseren Gemischbildung im Hauptbrennraum 2.

Wird in der Vorkammer 3 eine hohe Sauerstoff- bzw. Luftmenge benötigt, dann wird während der Betriebsphase, in der die Luftbeschickung der Vorkammer 3 über das Einströmen von Gemisch aus dem Hauptbrennraum 2 erfolgt, das Ventil 7 vorübergehend geöffnet. Besonders bevorzugt wird dann das Ventil 7 (kurz) vor dem Ende der Beschickung geschlossen werden, damit das zum Schluss in die Vorkammer 2 hineingedrängte Gemisch vollständig durch die Überströmkanäle 6 geleitet wird und daher für eine zusätzliche Verwirbelung sorgt zum Vorteil einer besseren Gemischbildung in der Vorkammer 3 die sich aus dem Kraftstoff in der Vorkammer 3 und aus dem vom Hauptbrennraum 2 zuströmendem Gemisch ergibt.

Unabhängig davon, ob es sich um ein passives oder aktiv ansteuerbares Ventil 7 handelt, verschafft der zusätzlich zur Verfügung stehende Strömungsquerschnitt einen Korridor (i) für eine Absenkung des Kraftstoff-Einspritzdrucks, (ii) die Möglichkeit einer späteren Kraftstoffeinspritzung mit den bereits erklärten Vorteilen und (iii) eine Vereinfachung höhere Sauerstoffanteile in der Vorkammer 3 bereitzustellen, d.h. die Anhebung des Verbrennungsluftverhältnis Lambda zu erzielen; zumindest ein Annäherung auf den Wert 1, damit die Erfindung auch auf mit Erdgas betriebene Motoren 1 anwendbar ist.

Letzteres ist sinnvoll, um einerseits in das kleine Innenvolumen der Vorkammer 3 eine möglichst hohe Menge an Kraftstoff zuführen zu können und dies in seiner Funktion als Zündverstärker zu nutzen. Ferner kann auf diese Weise die Vorkammer 3 derart betrieben werden, dass die dortige Verbrennung des Gemisches möglichst nah bei der maximal möglichen Temperatur erfolgt, was insbesondere für einen Wasserstoffmotor von Vorteil ist.

Sofern mit dem Wasserstoff eine Abgasnachbehandlung ohne ein SCR-System angestrebt wird, kann es selbstverständlich zielführender sein, das Verbrennungsluftverhältnis Lambda auf einen Wert einzustellen, der ein Optimum zwischen den beiden gegenläufigen Anforderungen einer hohen Temperatur und einem möglichst geringen NO_{X}-Rohemissionen herbeiführt.

Unter dem Augenmerk, eines Verzichts einer Abgasnachbehandlung ist eine Betrachtung der durch die Verbrennung in der Vorkammer 3 verursachten Emissionen auch relevant. Bekanntermassen existieren sehr niedrige Grenzwerte für Abgas-Schadstoffe. Werden diese überschritten, ist eine Abgasnachbehandlung verpflichtend. Da die Betriebsführung im Hauptbrennraum 2 extrem schadstoffarm abläuft, können die in der Vorkammer 3 verursachten Emissionen systemrelevant sein.

So ist nach der Erfindung möglich, dass sowohl erstens die Zuführung des Kraftstoffes vergleichbar, wie bei einer Direkteinspritzung unter hohem Druck sowie mit einem vorteilhaften Spraybild in den Hauptbrennraum einströmt und hierbei sämtliche Öffnungen über die die Kraftstoff-Strahlen in den Hauptbrennraum eindringen besonders vorteilhaft positioniert sind, wie dies bei einer Direkteinspritzung der Fall ist, aber zugleich zweitens auch das Hineinschiessen der Zündfackeln in den Hauptbrennraum 2 ausgehend von der optimalen Position erfolgen kann, was nur durch eine erfindungsgemässe Vorrichtung möglich ist.

Weiter ist vorteilhaft, dass pro Hauptbrennraum 2 eines Zylinders mit einer gespülten Vorkammer 3 nur ein einziger Injektor 5 benötigt wird. Gemäß dem Stand der Technik sind hierfür zwei Injektoren erforderlich. Diese Einsparung beschränkt sich selbstverständlich nicht nur auf das Bauteil, sondern schliesst die Peripherie mit ein, z.B. die Kraftstoffzuführung und die Injektoransteuerung.

Zudem kann auch eine weitere Erhöhung des Verbrennungsluftverhältnis Lambda möglicherweise ausschlaggebend zur Erzielung mindestens eines weiteren diskreten Schrittes zur Reduzierung der Abgasnachbehandlung sein, z.B. dem Ausweichen auf eine kleinere Baugrösse oder den Wegfall einer gesamten Stufe bspw. dem Wegfall des SCR-Systems bis hin zu einer kompletten Einsparung eines AGN-Systems.

Abschliessend sei der Hinweis erlaubt, dass die Erfindung nicht mit der mit einem Vorkammer-Dieselmotor verwechselt werden darf. Aufgabe der Vorkammer eines Vorkammer-Dieselmotors ist die Kraftstoff-Zerstäubung. Ein erfindungsgemässer Motor erhält hingegen den bereits zerstäubten Kraftstoff aufgrund der HochdruckEinspritzung. Die Primärfunktion der Vorkammer eines erfindungsgemässen Motors ist die eines Zündverstärkers. Deshalb unterscheiden sich die Volumina der Vorkammer und des Hauptbrennraums bei einem erfindungsgemässen Motor um Grössenordnungen, die Zehnerpotenzen überschreiten können, derweil das bei einem Vorkammer-Dieselmotor lediglich ein Faktor der Grössenordnung von 3 ist.

### Bezugszeichenliste:

- 1: Motor
- 2: Hauptbrennraum
- 3: Vorkammer
- 4: Zündkerze/Zündvorrichtung
- 5: Injektor
- 6: Überströmkanal
- 7: Ventil
- 8: Wand zwischen Vorkammer und Hauptbrennraum
- 9: Ventilstössel
- 10: Fluidverbindung durch geöffnetes Ventil
- 11: erster Verdichter
- 12: zweiter Verdichter
- 13: Ladeluftpfad
- 14: erster Ladeluftkühler
- 15: zweiter Ladeluftkühler
- 16: Kolben
- 17: Lufteinlass
- 18: Luftauslass
- 19: Einlassventil
- 20: Auslassventil
- 21: Injektor im Hauptbrennraum
- 22: Kühlkreislauf
- 23: Niedertemperaturkreislauf
- 24: HD-Turbine
- 25: ND-Turbine

- S: Symmetrieachse

## Patentansprüche

1. Fahrzeug, insbesondere eine mobile Arbeitsmaschine, mit einem Gasmotor (1) mit Vorkammerzündung, wobei der Gasmotor umfasst:
einen Hauptbrennraum (2) in einem Zylinder des Motors (1) zum Verbrennen eines Kraftstoff-Luftgemisches, und
eine Vorkammer (3) mit einer darin hineinragenden Zündvorrichtung (4) und einem darin hineinragenden Kraftstoffinjektor (5),
wobei die Vorkammer (3) über mindestens einen Überströmkanal (6) verfügt, der die Vorkammer (3) mit dem Hauptbrennraum (2) fluidisch verbindet, wobei
der in der Vorkammer (3) hineinragende Kraftstoffinjektor (5) der einzige Kraftstoffinjektor (5) ist, über den Kraftstoff in den zugehörigen Hauptbrennraum (2) eingeführt werden kann,
der Kraftstoff Wasserstoff ist,
**dadurch gekennzeichnet, dass**
die Kraftstoffeinspritzung in die Vorkammer (3) derart erfolgt, so dass ein Verbrennungsluftverhältnis Lambda in der Vorkammer zum Zündzeitpunkt einen Wert zwischen 0,33 und 0,53 aufweist.

2. Fahrzeug nach Anspruch 1, wobei der Hauptbrennraum (2) eine Symmetrieachse (S) aufweist, die mit einer Symmetrieachse (S) der Vorkammer (3) zusammenfällt.

3. Fahrzeug nach einem der vorhergehenden Ansprüche, wobei der Hauptbrennraum (2) eine Symmetrieachse (S) aufweist, die mit einer Anordnungsposition des in die Vorkammer (3) hineinragenden Kraftstoffinjektors (5) zusammenfällt.

4. Fahrzeug nach einem der vorhergehenden Ansprüche, wobei der Hauptbrennraum (2) eine Symmetrieachse (S) aufweist, die gleichzeitig eine Achse für dazu drehsymmetrisch angeordnete mehrere Überströmkanäle (6) im Übergang von Vorkammer (3) und Hauptbrennraum (2) ist.

5. Fahrzeug nach einem der vorhergehenden Ansprüche, ferner umfassend ein Ventil (7) in einer Vorkammer (3) und Hauptbrennraum (2) trennenden Wand (8), das neben dem mindestens einem Überströmkanal (6) für eine wahlweise zusätzliche fluidische Verbindung (10) zwischen Vorkammer (3) und Hauptbrennraum (2) sorgt.

6. Fahrzeug nach Anspruch 5, wobei das Ventil (7) ein aktiv steuerbares Ventil (7) ist, um je nach Bedarf die zusätzliche fluidische Verbindung (10) zwischen Vorkammer (3) und Hauptbrennraum (2) zu bilden.

7. Fahrzeug nach Anspruch 5, wobei
das Ventil (7) ein passives Ventil (7) ist, das in einem geöffneten Zustand die zusätzliche fluidische Verbindung (10) zwischen Vorkammer (3) und Hauptbrennraum (2) bildet und in einem geschlossenen Zustand diese zusätzliche fluidische Verbindung (10) verschließt, und
einen geschlossenen Zustand einnimmt, wenn ein Druck in der Vorkammer (3) um einen gewissen Schwellenwert größer als ein Druck in dem Hauptbrennraum (2) ist und einen offenen Zustand einnimmt, wenn ein Druck in im Hauptbrennraum (2) vorliegt, der um den gewissen Schwellenwert grösser als der Druck in der Vorkammer (3) ist, wobei der Schwellenwert 0 sein kann.

8. Fahrzeug nach einem der vorhergehenden Ansprüche 5 bis 7, wobei das Ventil (7) einen in der die Vorkammer (3) und Hauptbrennraum (2) trennenden Wand (8) angeordneten beweglichen Ventilstössel (9) aufweist, der vorzugsweise zu einer Seite hin mittels eines Federelements vorgespannt ist.

9. Fahrzeug nach Anspruch 8, wobei die die Vorkammer (3) und Hauptbrennraum (2) trennende Wand (8) und der Ventilstössel (9) so ausgebildet sind, dass in mindestens einem geöffneten und/oder mindestens einem geschlossenen Zustand eine jeweilige Seite der Wand (8) bündig zu dem Ventil (7) abschließt.

10. Fahrzeug nach einem der vorhergehenden Ansprüche 5 bis 7, wobei
das Ventil (7) oder ein Ventilstössel (9) des Ventils (7) koaxial zu einer Symmetrieachse (S) des Hauptbrennraums (2) angeordnet ist, und/oder
die in einem geöffneten Zustand des Ventils (7) gebildete fluidische Verbindung (10) symmetrisch zu einer Symmetrieachse (S) des Hauptbrennraums (2) ist.

11. Fahrzeug nach einem der vorhergehenden Ansprüche, wobei der Kraftstoff eine Zündfähigkeit für Lambda oberhalb 2,5 aufweist und besonders bevorzugt eine Zündfähigkeit für Lambda gleich oder oberhalb von 3 aufweist und ganz besonders bevorzugt eine Zündfähigkeit für Lambda gleich oder oberhalb von 5 aufweist.

12. Fahrzeug nach einem der vorhergehenden Ansprüche, wobei der Kraftstoffinjektor dazu ausgelegt ist, den Kraftstoff H₂ mit einem Druck im Bereich von 200 bis 500 bar, vorzugsweise 200 bis 400 bar, bevorzugterweise 250 bis 350 bar und ganz besonders bevorzugt im Bereich von 290 bis 310 bar einzuspritzen.

13. Verfahren zum Steuern eines Fahrzeugs nach Anspruch 6, wobei das Ventil (7) vor einem Ende einer Kraftstoffzufuhr über den Kraftstoffinjektor (5) geschlossen wird, damit der zum Schluss in den Hauptbrennraum (2) zugeführte Kraftstoff vollständig durch die Überströmkanäle (6) strömt, um für eine zusätzliche Verwirbelung eines Kraftstoff-Luftgemisches in dem Hauptbrennraum (2) zu sorgen.

14. Verfahren nach Anspruch 13, wobei das Ventil (7) während einer Kompressionsphase im Zylinder vorübergehend geöffnet wird, zur Erzielung einer höheren Luft- oder Sauerstoffmenge in der Vorkammer (3), um einen besonders zuverlässigen und/oder besonders schadstoffarmen und/oder energetisch vorteilhaften Zündvorgang auszuführen.

## Claims

1. A vehicle, in particular a mobile working machine, having a gas engine (1) with prechamber ignition, wherein the gas engine comprises:
a main combustion chamber (2) in a cylinder of the engine (1) for combusting an air-fuel mixture, and
a prechamber (3) with an ignition device (4) projecting into it and a fuel injector (5) projecting into it,
wherein the prechamber (3) has at least one transfer channel (6) that fluidically connects the prechamber (3) to the main combustion chamber (2),
wherein the fuel injector (5) projecting into the prechamber (3) is the only fuel injector (5) through which fuel can be introduced into the associated main combustion chamber (2),
the fuel being hydrogen,
**characterized in that**
the fuel injection into the prechamber (3) is carried out such that an air-combustion ratio lambda in the prechamber has a value between 0.33 and 0.53 at the time of ignition.

2. The vehicle according to claim 1, wherein the main combustion chamber (2) has an axis of symmetry (S) that coincides with an axis of symmetry (S) of the prechamber (3).

3. The vehicle according to any one of the preceding claims, wherein the main combustion chamber (2) has an axis of symmetry (S) that coincides with an arrangement position of the fuel injector (5) projecting into the prechamber (3).

4. The vehicle according to any one of the preceding claims, wherein the main combustion chamber (2) has an axis of symmetry (S) that is simultaneously an axis for several transfer channels (6) arranged rotationally symmetrically with respect thereto in the transition between the prechamber (3) and the main combustion chamber (2).

5. The vehicle according to any one of the preceding claims, further comprising a valve (7) in a wall (8) separating the prechamber (3) and the main combustion chamber (2), which, in addition to the at least one transfer channel (6), provides an additional selective fluidic connection (10) between the prechamber (3) and the main combustion chamber (2).

6. The vehicle according to claim 5, wherein the valve (7) is an actively actuated valve (7) for forming, as required, the additional fluidic connection (10) between the prechamber (3) and the main combustion chamber (2).

7. The vehicle according to claim 5, wherein
the valve (7) is a passive valve (7) which, in an open state, forms the additional fluidic connection (10) between the prechamber (3) and the main combustion chamber (2) and, in a closed state, closes this additional fluidic connection (10), and
assumes a closed state when a pressure in the prechamber (3) is higher by a certain threshold value than a pressure in the main combustion chamber (2), and assumes an open state when a pressure is present in the main combustion chamber (2) which is higher by a certain threshold value than the pressure in the prechamber (3), the threshold value being able to be zero.

8. The vehicle according to any one of claims 5 to 7, wherein the valve (7) has a movable valve plunger (9) arranged in the wall (8) separating the prechamber (3) and the main combustion chamber (2), which is preferably preloaded toward one side by means of a spring element.

9. The vehicle according to claim 8, wherein the wall (8) separating the prechamber (3) and the main combustion chamber (2) and the valve plunger (9) are configured such that, in at least one open state and/or at least one closed state, a respective side of the wall (8) terminates flush with the valve (7).

10. The vehicle according to any one of claims 5 to 7, wherein
the valve (7) or a valve plunger (9) of the valve (7) is arranged coaxially with an axis of symmetry (S) of the main combustion chamber (2), and/or
the fluidic connection (10) formed in an open state of the valve (7) is symmetrical with respect to an axis of symmetry (S) of the main combustion chamber (2).

11. The vehicle according to any one of the preceding claims, wherein the fuel has an ignition capability for a lambda above 2.5 and, particularly preferably, an ignition capability for a lambda equal to or greater than 3 and, very particularly preferably, an ignition capability for a lambda equal to or greater than 5.

12. The vehicle according to any one of the preceding claims, wherein the fuel injector is designed to inject the fuel H₂ at a pressure in the range from 200 to 500 bar, preferably from 200 to 400 bar, more preferably from 250 to 350 bar, and very particularly preferably in the range from 290 to 310 bar.

13. A method for controlling a vehicle according to claim 6, wherein the valve (7) is closed before the end of a fuel supply by means of the fuel injector (5) so that the fuel supplied at the end into the main combustion chamber (2) flows completely through the transfer channels (6) in order to ensure an additional turbulence of a fuel-air mixture in the main combustion chamber (2).

14. The method according to claim 13, wherein the valve (7) is temporarily opened during a compression phase in the cylinder in order to obtain a greater amount of air or oxygen in the prechamber (3) to perform a particularly reliable and/or particularly low-emission and/or energy-advantageous ignition process.

## Revendications

1. Véhicule, notamment machine de travail mobile, avec un moteur à gaz (1) à allumage dans une préchambre, où le moteur à gaz comprend :
une chambre de combustion principale (2) dans un cylindre du moteur (1) pour brûler un mélange air-carburant, et
une préchambre (3) avec un dispositif d'allumage (4) pénétrant dans celle-ci et un injecteur de carburant (5) pénétrant dans celle-ci,
où la préchambre (3) dispose d'au moins un canal de transfert (6) qui relie fluidiquement la préchambre (3) à la chambre de combustion principale (2), où
l'injecteur de carburant (5) pénétrant dans la préchambre (3) est le seul injecteur de carburant (5) par l'intermédiaire duquel du carburant peut être introduit dans la chambre de combustion principale (2) associée,
le carburant est de l'hydrogène,
**caractérisé en ce que**
l'injection de carburant dans la préchambre (3) s'effectue de telle sorte qu'un rapport d'air de combustion lambda dans la préchambre présente une valeur comprise entre 0,33 et 0,53 au moment de l'allumage.

2. Véhicule selon la revendication 1, où la chambre de combustion principale (2) présente un axe de symétrie (S) qui coïncide avec un axe de symétrie (S) de la préchambre (3).

3. Véhicule selon l'une quelconque des revendications précédentes, où la chambre de combustion principale (2) présente un axe de symétrie (S) qui coïncide avec une position d'agencement de l'injecteur de carburant (5) pénétrant dans la préchambre (3).

4. Véhicule selon l'une quelconque des revendications précédentes, où la chambre de combustion principale (2) présente un axe de symétrie (S) qui est en même temps un axe pour plusieurs canaux de transfert (6) agencés de manière symétrique en rotation par rapport à celui-ci dans la transition entre la préchambre (3) et la chambre de combustion principale (2).

5. Véhicule selon l'une quelconque des revendications précédentes, comprenant en outre une soupape (7) dans une paroi (8) séparant la préchambre (3) et la chambre de combustion principale (2), qui assure, en plus de l'au moins un canal de transfert (6), une liaison fluidique supplémentaire sélective (10) entre la préchambre (3) et la chambre de combustion principale (2).

6. Véhicule selon la revendication 5, où la soupape (7) est une soupape à commande active (7) afin de former, selon les besoins, la liaison fluidique supplémentaire (10) entre la préchambre (3) et la chambre de combustion principale (2).

7. Véhicule selon la revendication 5, où
la soupape (7) est une soupape passive (7) qui, dans un état ouvert, forme la liaison fluidique supplémentaire (10) entre la préchambre (3) et la chambre de combustion principale (2) et, dans un état fermé, ferme cette liaison fluidique supplémentaire (10), et
prend un état fermé lorsqu'une pression dans la préchambre (3) est supérieure d'une certaine valeur seuil à une pression dans la chambre de combustion principale (2) et prend un état ouvert lorsqu'il existe dans la chambre de combustion principale (2) une pression supérieure d'une certaine valeur seuil à la pression dans la préchambre (3), la valeur seuil pouvant être de 0.

8. Véhicule selon l'une quelconque des revendications 5 à 7 précédentes, où la soupape (7) présente un poussoir de soupape mobile (9) agencé dans la paroi (8) séparant la préchambre (3) et la chambre de combustion principale (2), qui est de préférence précontraint vers un côté au moyen d'un élément à ressort.

9. Véhicule selon la revendication 8, où la paroi (8) séparant la préchambre (3) et la chambre de combustion principale (2) et le poussoir de soupape (9) sont configurés de telle sorte que, dans au moins un état ouvert et/ou au moins un état fermé, un côté respectif de la paroi (8) se termine à fleur de la soupape (7).

10. Véhicule selon l'une quelconque des revendications 5 à 7 précédentes, où
la soupape (7) ou un poussoir de soupape (9) de la soupape (7) est agencé(e) coaxialement à un axe de symétrie (S) de la chambre de combustion principale (2), et/ou
la liaison fluidique (10) formée dans un état ouvert de la soupape (7) est symétrique par rapport à un axe de symétrie (S) de la chambre de combustion principale (2).

11. Véhicule selon l'une quelconque des revendications précédentes, où le carburant présente une capacité d'allumage pour un lambda supérieur à 2,5 et, de manière particulièrement préférée, une capacité d'allumage pour un lambda égal ou supérieur à 3 et, de manière tout particulièrement préférée, une capacité d'allumage pour un lambda égal ou supérieur à 5.

12. Véhicule selon l'une quelconque des revendications précédentes, où l'injecteur de carburant est conçu pour injecter le carburant H₂ à une pression dans la plage de 200 à 500 bars, de préférence de 200 à 400 bars, de manière encore plus préférée de 250 à 350 bars et de manière tout particulièrement préférée dans la plage de 290 à 310 bars.

13. Procédé de commande d'un véhicule selon la revendication 6, où la soupape (7) est fermée avant une fin d'une amenée de carburant par l'intermédiaire de l'injecteur de carburant (5) afin que le carburant amené à la fin dans la chambre de combustion principale (2) s'écoule complètement à travers les canaux de transfert (6) afin d'assurer une turbulence supplémentaire d'un mélange carburant-air dans la chambre de combustion principale (2).

14. Procédé selon la revendication 13, où la soupape (7) est ouverte temporairement pendant une phase de compression dans le cylindre afin d'obtenir une quantité d'air ou d'oxygène plus importante dans la préchambre (3) pour effectuer un processus d'allumage particulièrement fiable et/ou particulièrement peu polluant et/ou avantageux sur le plan énergétique.
